# EUROPEAN PATENT APPLICATION

(11) **EP 2 610 744 A1**
(43) Date of publication of application: **03.07.2013**
(21) Application number: 12198786.1
(22) Date of filing: 20.12.2012
(51) Int. Cl.: G06F 9/445

(54) **Electronic system, control method thereof, display apparatus, upgrade apparatus, and data input/output processing method of display apparatus**

(30) Priority: 28.12.2011 KR 20110144363; 31.01.2012 KR 20120009402; 28.08.2012 KR 20120094230
(71) Applicant: Samsung Electronics Co., Ltd., Gyeonggi-do 443-742 (KR)
(72) Inventor: RHA, Kyoung-seok, Gyeonggi-do (KR); SHIN, Ki-ock, Gyeonggi-do (KR); LEE, Tae-young, Gyeonggi-do (KR); CHO, Soon-jae, Gyeonggi-do (KR); HAM, Cheul-hee, Gyeonggi-do (KR)
(74) Representative: Instone, Terry

(57) **Abstract**

An electronic system, a control method for the electronic system, a display apparatus, an upgrade apparatus, and a data input/output processing method of the display apparatus are provided. The electronic system includes a first system on chip (SOC) including a first functional block which performs a first function, a second functional block which performs a second function, and a first bus network which performs communication between the first functional block and the second functional block, a connection unit which connects a second SOC to the first SOC, wherein the second SOC comprises a third functional block configured to upgrade the first function and a second bus network, and a power supply unit which supplies power to the first SOC and the second SOC, wherein the power supply unit blocks power from being supplied to the first functional block if the second SOC is connected to the connection unit.

## Description

### BACKGROUND

### Field

Apparatuses and methods consistent with exemplary embodiments relate to an electronic system, a control method thereof, a display apparatus, an upgrade apparatus, and a data input/output processing method of a display apparatus.

### Description of the Related Art

A display apparatus includes a plurality of input ports to input image signals or image data from a variety of external image sources and processes the input image data to display an image on its own display panel. As necessary, the display apparatus outputs the processed image data through an output port. Further, when a plurality of external devices are connected to the display apparatus via a plurality of input/output (I/O) ports, the display apparatus may be configured to output data input from one external device to another external device. Examples of the display apparatus may include a television (TV) and a monitor. For example, a TV processes a broadcast signal transmitted from outside of the TV according to various types of image processing processes, e.g., decoding and scaling, to display an image based on a user-desired broadcast channel.

The display apparatus has an embedded image processing board configured as a circuit including various kinds of chip sets and a memory to conduct such image processing processes. With the development of technology and because of diverse user demands, there is a growing demand for a display apparatus having advanced capabilities and expanded functions. When a user has to purchase a new display apparatus in order to utilize newly added or upgraded functions, this results in an economic burden to the user and resources are not adequately utilized. Thus, there is a demand for a display apparatus which can be upgraded so as to easily add or expand new or advanced functions.

When an upgrade apparatus to upgrade hardware or software of the display apparatus is connected to the display apparatus, traffic related to transferring of data increases, and thus it is necessary to prepare for a data transmission delay.

Meanwhile, a system-on-chip (SOC) in which a plurality of chips serving different functions are integrated on a single chip is widely used, and the display apparatus includes an embedded SOC. Conventionally, since it is difficult to upgrade only part of the chips in the SOC, the entire SOC is replaced.

### SUMMARY

An aspect of one or more exemplary embodiments is to upgrade a hardware or software function of a display apparatus by connecting an external device to the display apparatus.

Another aspect of one or more exemplary embodiments is to decrease data transmission traffic when an external device is connected to a display apparatus to transmit data.

Still another aspect of one or more exemplary embodiments is to upgrade part of the functions of an SOC included in a display apparatus by an external device connected to the display apparatus. According to the present invention there is provided an apparatus and method as set forth in the appended claims. Other features of the invention will be apparent from the dependent claims, and the description which follows.

According to an aspect of an exemplary embodiment, there is provided an electronic system including a first SOC including a first functional block which performs a first function, a second functional block which performs a second function, and a first bus network which performs communication between the first functional block and the second functional block, a connection unit which connects a second SOC to the first SOC, wherein the second SOC comprises a third functional block configured to upgrade the first function and a second bus network, and a power supply unit which supplies power to the first SOC and the second SOC, wherein the power supply unit blocks power from being supplied to the first functional block if the second SOC is connected to the connection unit.

According to an aspect of another exemplary embodiment, there is provided a display apparatus including: a first system on chip (SOC) including a first functional block which performs a first function, a second functional block which performs a second function, and a first bus network which performs communication between the first functional block and the second functional block; a connection unit to which an external peripheral device configured to upgrade the first function is connected; and a power supply unit, wherein the power supply unit blocks power from being supplied to the first functional block when the external peripheral device is connected to the connection unit.

According to an aspect of another exemplary embodiment, there is provided an electronic system including: a connection unit to which at least one input/output (I/O) device is connected; an I/O controller which controls input/output of data through the connection unit; an exclusive memory which stores only the data input or output through the connection unit; and an exclusive memory controller which stores the data input through the connection unit in the exclusive memory, or reads the data stored in the exclusive memory according to a control instruction of the I/O controller.

According to an aspect of another exemplary embodiment, there is provided an a display apparatus including: an image signal input unit; a first image processing unit which processes an image signal input by the image signal input unit to output a first output signal; an upgrade apparatus connection unit to which an upgrade apparatus including a second image processing unit is connected; a display unit which displays at least one of a first screen corresponding to the first output signal and a second screen corresponding to a second output signal processed by the second image processing unit of the upgrade apparatus; and a data input/output (I/O) processing unit including an I/O controller which controls input/output of data through at least one connection unit connectable with at least one I/O device, an exclusive memory which stores only the data input or output through the connection unit, and an exclusive memory controller which stores the data input through the connection unit in the exclusive memory or reads the data stored in the exclusive memory according to a control instruction of the I/O controller.

According to an aspect of another exemplary embodiment, there is provided an upgrade apparatus including: a body connection unit which is connected to a display apparatus including a first image processing unit and a first controller; a second image processing unit which processes an input image signal to output a second output signal; a second controller which controls the second image processing unit; and a data input/output (I/O) processing unit including an I/O controller which controls input/output of data through at least one connection unit connectable with at least one I/O device, an exclusive memory which stores only the data input or output through the connection unit, and an exclusive memory controller storing the data input through the connection unit in the exclusive memory or reads the data stored in the exclusive memory according to a control instruction of the I/O controller.

According to an aspect of another exemplary embodiment, there is provided a data input/output processing method of an electronic system including a plurality of connection units respectively connected with a first input/output (I/O) device and a second I/O device, the method including: reading data from the first I/O device in response to a request for transmission of data from the first I/O device to the second I/O device; storing the read data in an exclusive memory which stores only data input or output through the plurality of connection units; reading the data stored in the exclusive memory; and transmitting the read data to the second I/O device.

As described above, according to one or more exemplary embodiments, a hardware or software function of a display apparatus may be upgraded by connecting an external device to the display apparatus.

Further, one or more exemplary embodiments may decrease data transmission traffic when an external device is connected to a display apparatus to transmit data.

In addition, one or more exemplary embodiments may enable part of the functions of an SOC included in a display apparatus to be upgraded by an external device connected to the display apparatus.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram schematically illustrating a general SOC used for a display device according to an exemplary embodiment;
FIG. 2 is a block diagram illustrating an electronic system according to a first exemplary embodiment;
FIG. 3 illustrates a first SOC, a connection unit, and a second SOC according to the first exemplary embodiment;
FIGS. 4 and 5 illustrate an interface included in the connection unit according to the first exemplary embodiment;
FIG. 6 schematically illustrates a display system using the electronic system according to the first exemplary embodiment;
FIG. 7 is a flowchart illustrating a control method of the electronic system according to the first exemplary embodiment;
FIG. 8 is a control block diagram illustrating an electronic system according to a second exemplary embodiment;
FIGS. 9 and 10 illustrate a display system using the electronic system according to the second exemplary embodiment; and
FIG. 11 is a flowchart illustrating a data input and output processing method of the electronic system according to the second exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

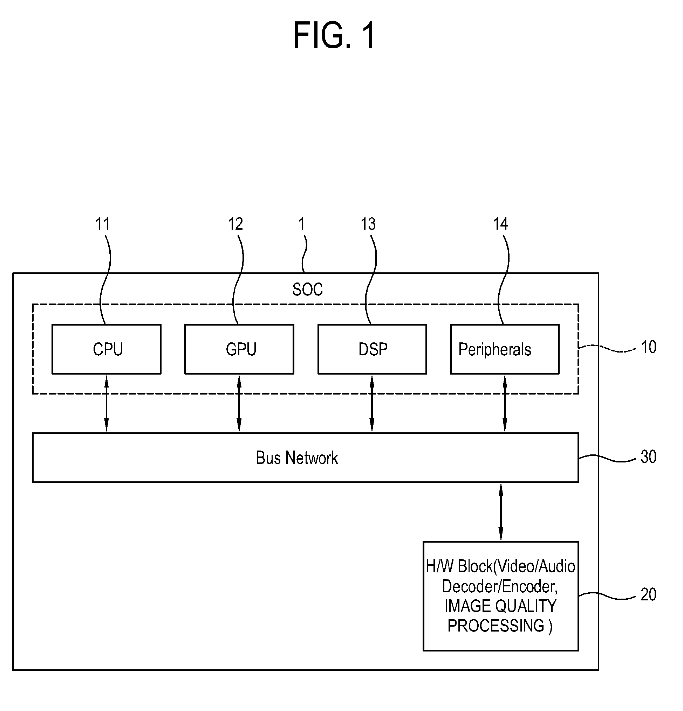

A first exemplary embodiment will be described with reference to FIGS. 1 to 6.

FIG. 1 is a block diagram schematically illustrating a system on chip (SOC) generally used for a display apparatus.

Referring to FIG. 1, the SOC 1 includes processing blocks 10 which includes a central processing unit (CPU) 11, a graphic processing unit (GPU) 12, a digital signal processing unit (DSP) 13, peripherals 14, a hardware block 20 serving video and audio processing, and a bus network 30 connecting the blocks.

According to a recent development trend in the SOC 1, specifications of the hardware block 20 serving video and audio processing are not substantially changed, whereas specifications of the processing blocks 10, such as the CPU 11 and the GPU 12, tend to be upgraded every year. Accordingly, when the processing blocks 10 need upgrading, a new SOC is produced, including hardware blocks, even though the specifications of the hardware blocks have not significantly changed. Thus, when a new SOC is developed, a new electronic product has to be released with the new SOC and a user also needs to buy the new electronic product in order to utilize an updated process. This causes economic difficulties for both a manufacturer and a user.

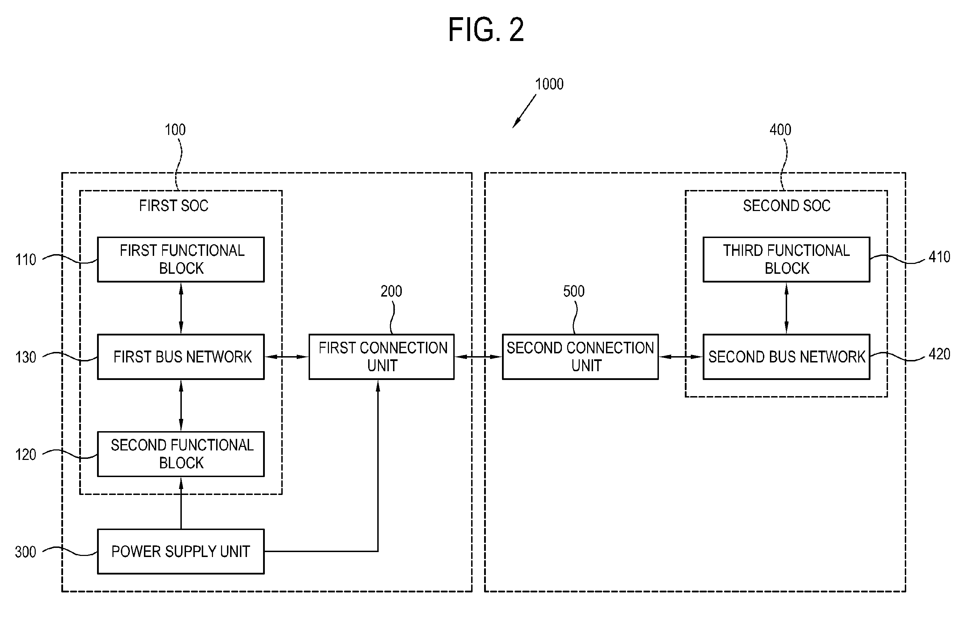

FIG. 2 is a block diagram illustrating an electronic system 1000 according to a first exemplary embodiment.

The electronic system 1000 includes a first SOC 100, a first connection unit 200, a power supply unit 300, a second connection unit 500 which corresponds to the first connection unit 200, and a second SOC 400.

The first SOC 100 includes a first functional block 110 performing a first function, a second functional block 120 performing a second function, and a first bus network 130 for communicating between the first functional block 110 and the second functional block 120.

The second SOC 400 includes a third functional block 410 serving an upgraded first function and a second bus network 420. The third functional block 410 performs the same function as that provided by the first functional block 110 but performs an upgraded version of the function compared to the first functional block 110.

The first connection unit 200, which is an interface to which the second SOC 400 is connected, is provided at the first SOC 100. The second connection unit 500 is provided at the second SOC 400 and corresponds with the first connection unit 200.

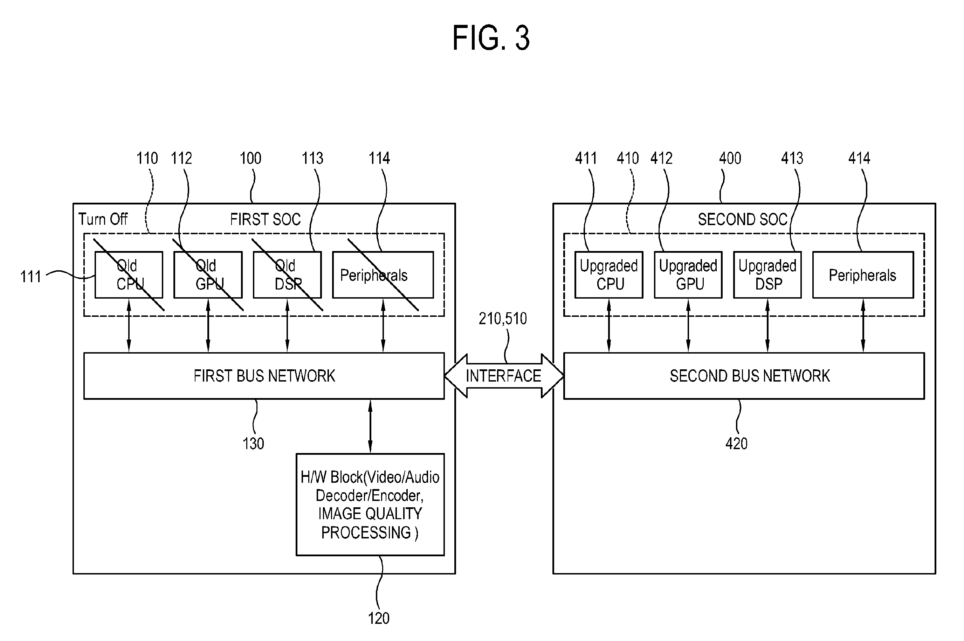

The first connection unit 200 may include a first interface 210 as shown in FIG. 3, which is used to perform communication between the first SOC 100 and the second SOC 400, and a second interface (not shown) for power supply. The first interface 210 is a type of bridge connecting the first bus network 130 and the second bus network 420. Thus, the second SOC 400 may access the first bus network 130 at random through the first interface 210.

Likewise, the first SOC 100 may access the second bus network 420 at random through the first interface 210. For example, the second functional block 120 accesses the second bus network 420 through the first interface 210 to enable data transmission and reception to the third functional block 410. For example, the third functional block 410 accesses the first bus network 130 through the first interface 210 to enable data transmission and reception to the second functional block 120. Accordingly, the first SOC 100 and the second SOC 400 may perform an operation as a single SOC through the first connection unit 200 and the second connection unit 500.

The second connection unit 500 is provided to correspond to the first connection unit 200 and may include a third interface 510 as shown in FIG. 3, which performs communication between the first SOC 100 and the second SOC 400, and a fourth interface (not shown) for power supply.

The first bus network 130 and the second bus network 420 may be configured as an Advanced Microcontroller Bus Architecture (AMBA) bus, manufactured by Advanced RISC Machine (ARM) Ltd., without being limited thereto. The first bus network 130 and the second bus network 420 are connected with a plurality of masters and a plurality of slaves, and they enable data transmission and reception by a general mediation program.

The power supply unit 300 may provide power to each component of the electronic system 1000. The power supply unit 300 may provide power necessary for operation of each component of the first SOC 100. The first connection unit 200 may further include the second interface (not shown) for power supply to the second SOC 400, and the power supply unit 300 may provide power necessary for operation of each component of the second SOC 400 through the second interface when the SOC 400 is connected to the first connection unit 200. The power supply unit 300 may convert commercial alternating current (AC) power input from outside of the electronic system 1000 into power for each component of the electronic system 1000 and may supply the power to the components of the electronic system 100.

When the second SOC 400 is connected to the first connection unit 200, the power supply unit 300 blocks power supplied to the first functional block 110 of the first SOC 100, and the third functional block 410 performs an operation instead of the first functional block 110 to upgrade the first function provided by the first functional block 110.

Thus, the second functional block 120 of the first SOC 100 and the third functional block 410 of the second SOC 400 perform communication through first interface 210 and third interface 510, and operate like a single SOC. That is, among specifications of an SOC, a functional block of the existing chip is used for unchanged specifications, an upgraded SOC including a functional block with upgraded specifications is developed, and the existing SOC and the upgraded SOC can communicate through an exclusive interface, thereby realizing the SOCs as a single SOC.

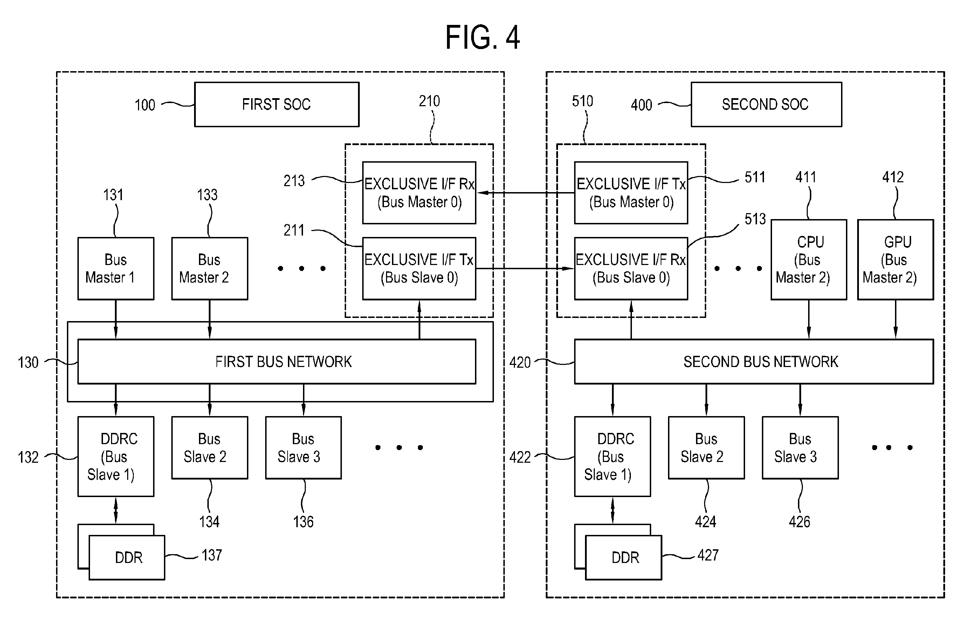

The first SOC 100 and the second SOC 400 may include a memory 137 and a memory 427, as shown in FIG. 4, and a memory controller 132 and a memory controller 422, as shown in FIG. 4, respectively.

FIG. 3 illustrates the first SOC 100, the first connection unit 200 and the second connection unit 500, and the second SOC 400 of FIG. 2 in detail.

The first SOC 100 includes functional blocks needed to display an image on a display apparatus, for example, a TV or a monitor. The first functional block 110 may include a CPU 111, a GPU 112, a DSP 113, and peripherals 114. Further, the second functional block 120 may include hardware blocks capable of performing video/audio processing, for example, a video decoder/encoder, an audio decoder/encoder, and an image quality processing unit.

The second SOC 400 may include the third functional block 410 providing an upgraded version of the first function provided by the first functional block 110. For example, the third functional block 410 includes an upgraded CPU 411 having a more upgraded specification than the CPU 111 of the first functional block 110, an upgraded GPU 412 having a more upgraded specification than the GPU 112 of the first functional block 110, an upgraded DSP 413 having a more upgraded specification than the DSP 113 of the first functional block 110, and upgraded peripherals 414 having more upgraded specifications than the peripherals 114 of the first functional block 110.

The first connection unit 200 and the second connection unit 500 include the first interface 210 and the second interface 510 to enable communication between the first bus network 130 and the second bus network 420.

When the second SOC 400 is connected through the first connection unit 200 and the second connection unit 500, the power supply unit 300 of FIG. 2 blocks power supplied to the first functional block 110 of the first SOC 100. In an exemplary embodiment, when the second SOC 400 is connected through the first connection unit 200 and the second connection unit 500, the upgraded CPU 411 of the second SOC 400 controls the power supply unit 300 through the interface 210 to block power supplied to the first functional block 110. Then, the CPU 111, the GPU 112, the DSP 113 and the peripherals 114 of the first functional block 110 are turned off, while the upgraded CPU 411, the upgraded GPU 412, the upgraded DSP 413, and the upgraded peripherals 414 of the third functional block 410 perform functions of the first functional block 110 instead, thereby achieving upgraded performance. The first interface 210 is an exclusive interface to enable communication between the first bus network 130 and the second bus network 420 and ultimately enables the second functional block 120 and the third functional block 410 to transmit and receive various types of control signals, data signals or image signals.

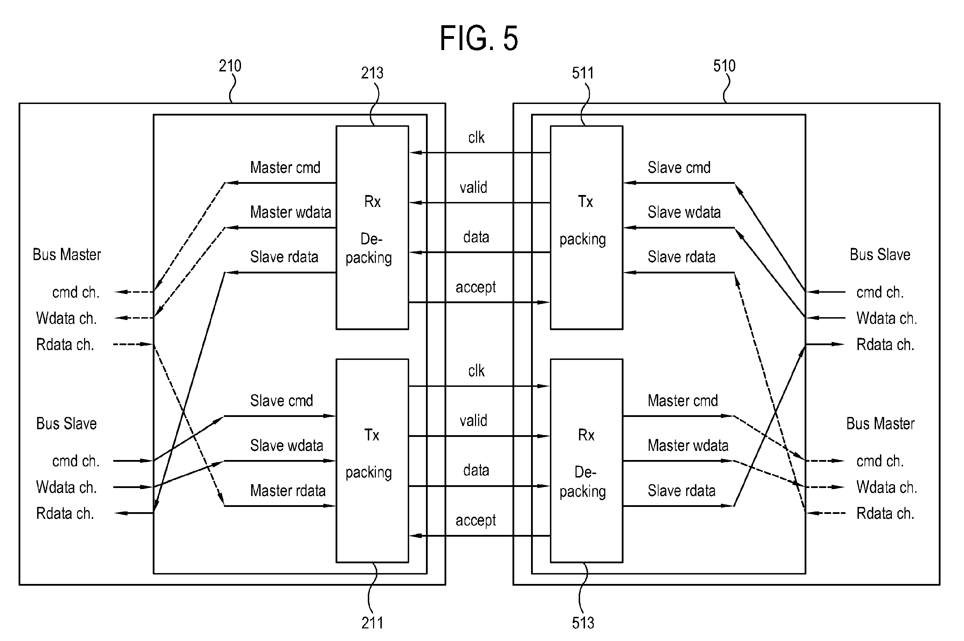

FIGS. 4 and 5 illustrate the first interface 210 and the third interface 510 included in the first connection unit 200 and the second connection unit 500 of FIG. 3 in detail.

Referring to FIG. 4, the first interface 210 includes a first packing unit 211 packing data transmitted from the first SOC 100 to the second SOC 400 and a first de-packing unit 213 unpacking packed data transmitted from the second SOC 400 to the first SOC 100.

Likewise, the third interface 510 includes a second packing unit 511 packing data transmitted from the second SOC 400 to the first SOC 100 and a second de-packing unit 513 unpacking packed data transmitted from the first SOC 100 to the second SOC 400.

When a first bus master 131 of the first SOC 100 wants to transmit data to the second SOC 400, the first packing unit 211 serves as a bus slave to receive the data through the first bus network 130, packs the data and transmits the data to the second de-packing unit 513 of the third interface 510. The second de-packing unit 513 receives and unpacks the packed data and performs a bus master function to transmit the data to a destination bus slave through the second bus network 420. A second bus master 133 of the first SOC 100 can also transmit data to the second SOC 400 similar to the first bus master 131.

Likewise, when the CPU 411 of the second SOC 400 wants to transmit data to the first SOC 100, the CPU 411 serves as a bus master to transmit the data to the second packing unit 511 of the third interface 510 through the second bus network 420, and the second packing unit 511 packs the received data from the bus master and transmits the data to the first de-packing unit 213. The first de-packing unit 213 unpacks the received packed data and performs a bus master function to transmit the data to a destination bus slave through the first bus network 130.

FIG. 5 illustrates the first interface 210 and the third interface 510 in more detail.

Referring to FIG. 5, the first packing unit 211 of the first interface 210 may receive a command from a command channel of a bus slave, write data from a write data channel of the bus slave and lead data from a lead channel of a bus master, and pack and transmit the command and the data to the second de-packing unit 513. When the second de-packing unit 513 accepts data reception, the first packing unit 211 may transmit the packed data to the second de-packing unit 513 according to a clock signal. The second de-packing unit 513 unpacks the packed data received from the first packing unit 211, identifies an address of the unpacked data, and transmits a command to a corresponding bus master through a command channel, writes data using a write data channel and reads data to a corresponding bus slave through a read data channel.

Data transmission and reception between the second packing unit 511 of the third interface 510 and the first de-packing unit 213 of the first interface 210 is substantially equivalent or similar to data transmission and reception between the first packing unit 211 of the first interface 210 and the second de-packing unit 513 of the third interface 510.

When the second SOC 400 is connected to the first SOC 100 through the first connection unit 200 and the third connection unit 500, the power supply unit 300 blocks power supplied to the first functional block 110 of the first SOC 100 performing the first function, and the second functional block 120 performing the second function may transmit or receive various types of control signals, data signals, and image signals to or from the third functional block 410 of the second SOC 400 through the first interface 210 and the third interface 510.

According to an exemplary embodiment, when a part of the blocks of the SOC 100 in the electronic system 1000 is functionally upgraded, the external second SOC 400 providing an enhanced function is connected to the electronic system 1000 to serve a more updated function than the existing SOC 100, and the other blocks of the existing SOC 100 may serve their native functions. Accordingly, a user may utilize an electronic system 1000 with entirely upgraded functions by using an external SOC, such as the second SOC 400. Further, while a manufacturer may not need to produce a new electronic system with a new SOC mounted whenever some blocks of an SOC are functionally upgraded. In the end, both the user and the manufacturer may receive economical benefits. Further, according to an exemplary embodiment, when the external second SOC 400 is connected, power supplied to a functional block of the existing first SOC 100, which is not in use is blocked, thereby saving power consumption of the electronic system 1000.

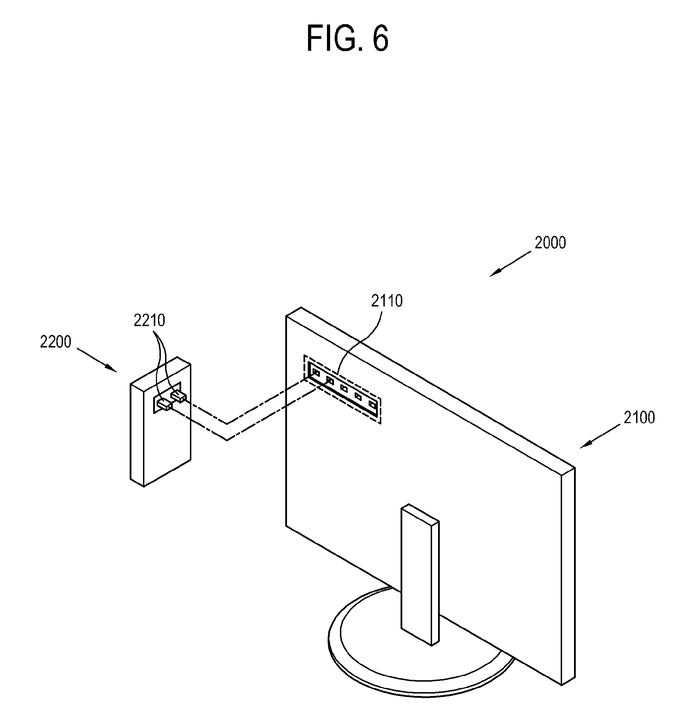

FIG. 6 schematically illustrates a display system 2000 using the electronic system 1000 of FIG. 2.

As shown in FIG. 6, the display system 2000 may include a display apparatus 2100 and an external peripheral device 2200.

The display apparatus 2100 may be configured as a TV displaying a broadcast image based on a broadcast signal, broadcast information or broadcast data transmitted from a broadcasting station. However, the display apparatus 2100 may be configured as various kinds of devices capable of displaying an image, without being limited to a TV. For example, the display apparatus 2100 may be configured as a smart TV. A smart TV is capable of receiving and displaying a broadcast signal in real time, has a web browsing function to retrieve and purchase various contents through the Internet while displaying a broadcast signal in real time, and provides a convenient user interface for the foregoing operations. Further, the smart TV includes an open software platform to provide a user with a bidirectional service. Thus, the smart TV provides a user with various contents, e.g., applications providing predetermined services, through the open software platform. Such applications include application programs capable of providing different kinds of services, e.g., SNS, banking service, news, weather, map, music, movies, games, and an electronic book.

The display apparatus 2100 may include a first SOC 100 having an integrated image processing function.

The external peripheral device 2200 is connected to the display apparatus 2100 to communicate therewith and may provide a more upgraded function than the display apparatus 2100. The external peripheral device 2200 may include a second SOC 400 providing a more upgraded function than the first SOC 100.

The display apparatus 2100 includes a first connection unit 2110 to which the external peripheral device 2200 is connected, and the external peripheral device 2200 includes a second connection unit 2210 corresponding to the first connection unit 2110 to be connected to the display apparatus 2100. The first connection unit 2110 and the second connection unit 2210 may be configured in an equivalent or similar manner to the first connection unit 200 and the second connection unit 500 of FIG. 2.

The second SOC 400 of the external peripheral device 2200 may provide a more enhanced function than the first SOC 100 of the display apparatus 2100, and the first SOC 100 and the second SOC 400 can to communicate with each other through the first connection unit 2110 and the second connection unit 2210, thus operating as if they are a single SOC.

When the external peripheral device 2200 is connected to the display apparatus 2100 through first the connection unit 2110 and the second connection unit 2210, the second SOC 400 in the external peripheral device 2200 accesses and controls a power supply unit through an interface of the connection units to block power supplied to the first functional block of the first SOC 100.

A display apparatus is an expensive electronic product. Once a user purchases the display apparatus, the user often does not replace the display apparatus for at least five years and thus may not use an upgraded function. In a hardware upgrade, some components embedded in the display apparatus need replacing physically, which is not easy in terms of manufacture and use. In a software upgrade, running updated software requires hardware designed accordingly.

However, according to an exemplary embodiment, when the external peripheral device 2200 having an upgraded SOC is connected to the display apparatus 2100, both a functional block providing an upgraded function of the SOC of the external peripheral device 2200 and other functional blocks of the SOC of the display apparatus 2100 than the functional block may be used. A manufacturer may provide a display system capable of providing an upgraded function at a low cost, while a user may utilize the display system having the upgraded function at a small cost.

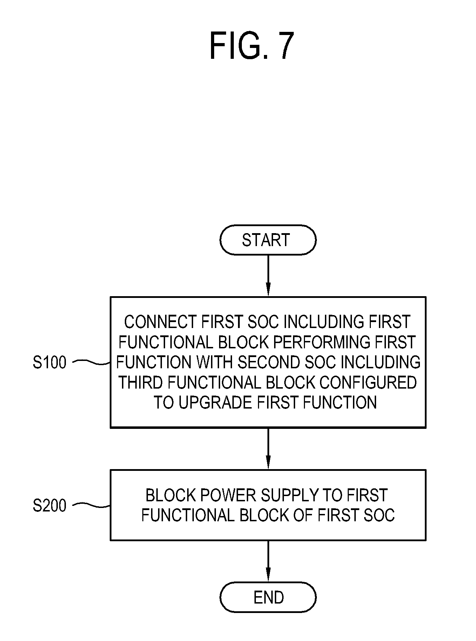

FIG. 7 is a flowchart illustrating a control method of the electronic system of FIG. 2.

The second SOC 400, including the third functional block 410 serving the upgraded version of the first functional block 110 and the second bus network 420, is connected to the first connection unit 200 of the electronic system 1000 provided with the first SOC 100 including the first functional block 110 performing the first function, the second functional block 120 performing the second function, and the first bus network 130 for communicating between the functional blocks, in operation S100.

When the second SOC 400 is connected, the power supply unit 300 blocks power supplied to the first functional block 110 of the first SOC 100 in operation S200.

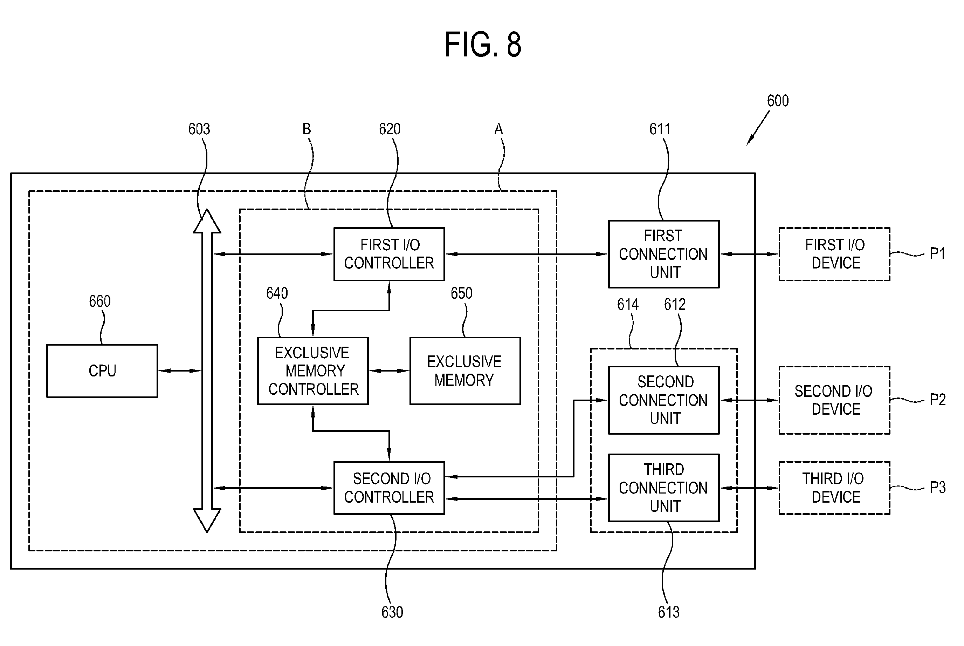

Hereinafter, a second exemplary embodiment will be described with reference to FIGS. 8 to 11.

FIG. 8 is a block diagram illustrating an electronic system 600 according to the second exemplary embodiment.

As shown in FIG. 8, the electronic system 600 according to the second exemplary embodiment includes first input/output (I/O) controller 620 and the second I/O controller 630 to control data input/output through at least one connection unit, such as first connection unit 611, second connection unit 612, and the third connection unit 613 to which at least one I/O device, such as first I/O device P1, second I/O device P2, and third I/O device P3, is connected, an exclusive memory 650 to store data input or output through the first connection unit 611, the second connection unit 612, and the third connection unit 613 only, and an exclusive memory controller 640 to store the data input through the first connection unit 611, the second connection unit 612, and the third connection unit 613 in the exclusive memory 650 or to read the data stored in the exclusive memory 650 according to a control instruction of the first I/O controller 620 and the second I/O controller 630.

The external first I/O device P1, the second I/O device P2, and the third I/O device P3 may be connected to the first connection unit 611, the second connection unit 612, and the third connection unit 613 via a cable or wirelessly to enable data communication with each other.

The first connection unit 611, the second connection unit 612, and the third connection unit 613 may be configured as connection ports in accordance with widely used general standards, such as high definition multimedia interface (HDMI), universal serial bus (USB), component, digital visual interface (DVI) and IEEE 1394 ports. Further, the first connection unit 611, the second connection unit 612, and the third connection unit 613 may be configured to connect to the external first I/O device P1, the second I/O device P2, and the third I/O device P3 through at least one wireless network among a wireless local area network (WLAN), WiFi, WiBro and long term evolution (LTE).

At least one of the external first I/O device P1, the second I/O device P2 and the third I/O device P3 may include at least one of a storage device, such as a USB storage medium, a hard disk, a flash memory and a solid state drive, and a mobile device, such as a PDA, a smartphone, a smart pad and a notebook.

The first I/O controller 620 and the second I/O controller 630 controls data input/output with respect to the first I/O device P1, the second I/O device P2 and the third I/O device P3 connected through the first connection unit 611, the second connection unit 612, and the third connection unit 613 via a cable or wirelessly.

The exclusive memory 650 may include a static random access memory (SRAM). The exclusive memory 650 may be provided as a memory having a faster reading/writing speed than a commercial memory, which will be described in more detail. Here, the SRAM is just an illustrative example of the exclusive memory 650, which may be changed or replaced with any other type of memory.

Here, the exclusive memory 650 is used to store only data input/output with respect to the external first I/O device P1, the second I/O device P2, and the third I/O device P3 connected to the first connection unit 611, the second connection unit 612, and the third connection unit 613. Thus, transmission latency which occurs in data input/output with respect to the external first I/O device P1, the second I/O device P2, and the third I/O device P3 may be reduced.

Meanwhile, the first I/O controller 620 and the second I/O controller 630 may include a first I/O controller 620 to control input/output of first data through a first connection unit 611 to which a first I/O device P1 is connected, and a second I/O controller 630 to control input/output of second and third data through a hub 614 including second connection unit 612 and third connection unit 613 to which second I/O device P2 and third I/O device P3 are connected, respectively.

In addition, the electronic system 600 may further include a central processing unit (CPU) 660 connected to communicate with the first I/O controller 620 and the second I/O controller 630 through a data bus.

Here, the CPU 660 may be configured to perform data processing and an operation. Also, the CPU 660 may be configured to process a data I/O instruction received from a user.

The CPU 660, the first I/O controller 620, the second I/O controller 630, the exclusive memory controller 640 and the exclusive memory 650 may be provided in a single chip. That is, the CPU 660, the first I/O controller 620, the second I/O controller 630, the exclusive memory controller 640 and the exclusive memory 650 may be configured as SOC A.

As necessary, the first I/O controller 620, the second I/O controller 630, the exclusive memory controller 640 and the exclusive memory 650 may be configured as a single chip, that is, SOC B, excluding the CPU 660.

Also, the CPU 660, the first I/O controller 620, the second I/O controller 630, the exclusive memory controller 640 and the exclusive memory 650 may be provided as a plurality of chips arranged on at least one substrate.

When there is a request for transmission of the second data from the second I/O device P2 to the third I/O device P3, the CPU 660 may control the exclusive memory controller 640 and the second I/O controller 630 to store the second data in the exclusive memory 650 and to read and transmit the second data stored in the exclusive memory 650 to the third I/O device P3.

In detail, to transmit the data from the second I/O device P2 to the third I/O device P3, the second I/P controller 630 reads the second data from the second I/O device P2. Then, the second I/O controller 630 controls the exclusive memory controller 640 to store the read second data in the exclusive memory 650. Also, the second I/O controller 630 controls the exclusive memory controller 640 to read the second data stored in the exclusive memory 650 and transmits the second data to the third I/O device P3.

Here, data input/output with respect to the second I/O device P2 and the third I/O device P3 is controlled by the second I/O controller 630, which may be conducted independently of the first I/O controller 620.

When there is a request for transmission of the first data from the first I/O device P1 to the second I/O device P2, the CPU 660 may control the exclusive memory controller 640 and the first I/O controller 620 and the second I/O controller 630 to store the first data in the exclusive memory 650 and to read and transmit the first data stored in the exclusive memory 650 to the second I/O device P2.

In detail, to transmit the data from the first I/O device P1 to the second I/O device P2, the first I/P controller 620 reads the first data from the first I/O device P1. Then, the first I/O controller 620 controls the exclusive memory controller 640 to store the read first data in the exclusive memory 650. Meanwhile, the second I/O controller 630 controls the exclusive memory controller 640 to read the first data stored in the exclusive memory 650 and transmits the first data to the second I/O device P2.

Here, a process of transmitting data from the second I/O device P2 to the first I/O device P1 is substantially the same as the foregoing process except for a subject responsible for the process, and thus description thereof will be omitted herein.

Meanwhile, the electronic system 600 may further include a general-purpose memory (not shown) to temporarily store data when the CPU 660 performs a process. The general-purpose memory may be configured as a synchronous dynamic random access memory (SDRAM). The general-purpose memory may be used to perform any process except for the data input/output.

As described above, the exclusive memory for data input/output with respect to the external first I/O device P1, the second I/O device P2, and the third I/O device P3 is used instead of the general-purpose memory, thereby decreasing data transmission latency.

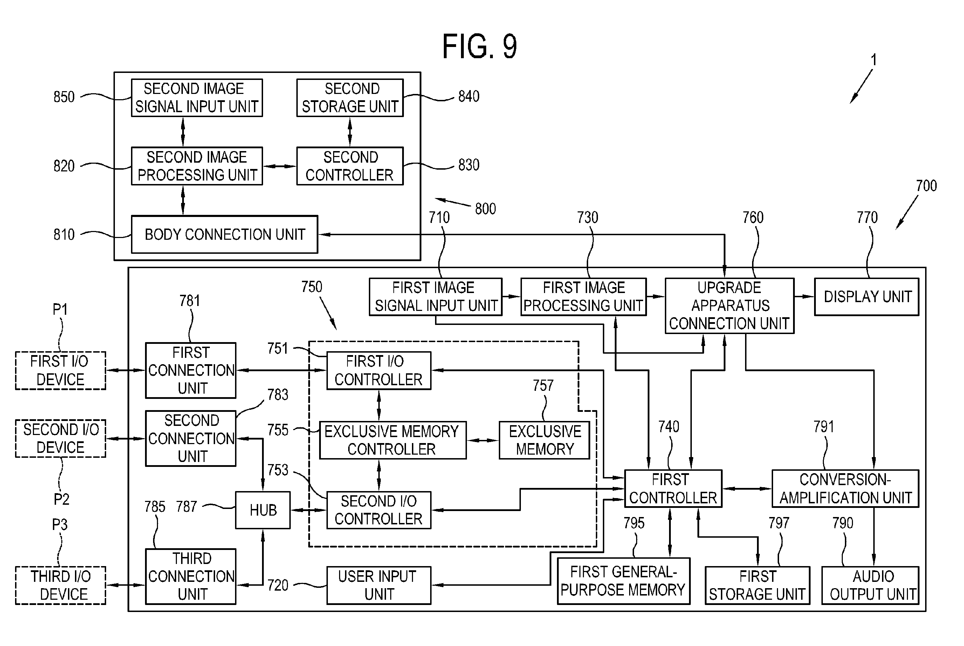

FIG. 9 illustrates a display system 1 using the electronic system according to the second exemplary embodiment.

As shown in FIG. 9, the display system 1 includes a display apparatus 700 processing an image signal provided from an external image source (not shown) according to a preset image processing process to display an image and an upgrade apparatus 800 upgrading hardware and/or software of the display apparatus 700.

In the system 1 of the exemplary embodiment, the display apparatus 700 is configured as a TV which displays broadcast images based on broadcast signals, broadcast information, or broadcast data received from a transmitter of a broadcasting station. However, such an example is provided only for illustrative purposes, and the display apparatus 700 may be configured as various devices which are capable of processing an image or processing and displaying an image, without being limited to a TV. For example, the display apparatus 700 may be configured as an image processing apparatus which performs an image processing function only and does not include a display unit, such as a set-top box.

The display apparatus 700 may display any kind of image, without being limited to a broadcast image. For example, the display apparatus 700 may display images, such as videos, still images, applications and on-screen display (OSD) based on signals or data received from various types of image sources (not shown), and a graphic user interface (GUI) for controlling various operations.

The upgrade apparatus 800 is connected to the display apparatus 700 to communicate therewith. The upgrade apparatus 800 upgrades existing hardware or software of the connected display apparatus 700 and enables an image signal to be processed by the upgraded hardware or software of the display apparatus 700, thereby displaying an image with improved quality.

As shown in FIG. 9, the display apparatus 700 includes a first image signal input unit 710 receiving an image signal and/or a broadcast signal, a first image processing unit 730 which processes an image signal input through the image signal input unit 710 to output a first output signal, an upgrade apparatus connection unit 760 to which the upgrade apparatus 800, including a second image processing unit 820, is connected, a display unit 770 displaying at least one of a first screen corresponding to the first output signal and a second screen corresponding to a second output signal processed by the second image processing unit 820 of the upgrade apparatus 800, and a data I/O processing unit 750.

The data I/O processing unit 750 includes first I/O controller 751 and second I/O controller 753 to control data input/output through at least one connection unit, such as first connection unit 781, second connection unit 783, and third connection unit 785, connected with at least one I/O device, an exclusive memory 757 to store only the data input or output through the first connection unit 781, the second connection unit 783, the and third connection unit 785, and an exclusive memory controller 755 to store the data input through the first connection unit 781, the second connection unit 783, and the third connection unit 785, in the exclusive memory 757 or to read the data stored in the exclusive memory 757 according to a control instruction of the first I/O controller 751 and the second I/O controller 753.

The first connection unit 781, the second connection unit 783, and the third connection unit 785, may be configured as connection ports in accordance with widely used general standards, such as HDMI, USB, component, DVI and IEEE 1394 ports. Further, the first connection unit 781, the second connection unit 783, and the third connection unit 785, may be configured to connect to the external first I/O device P1, the second I/O device P2, and the third I/O device P3 through at least one wireless network among a WLAN, WiFi, WiBro and Long Term Evolution (LTE).

The first connection unit 781, the second connection unit 783, and the third connection unit 785, include the firs connection unit 781, second connection unit 783, and third connection unit 785, to which the first I/O device P1, the second I/O device P2, and the third I/O device P3 are connected, respectively.

Here, the first I/O controller 751 and the second I/O controller 753 may include a first I/O controller 751 to control input/output of first data through the first connection unit 781 connected with the first I/O device P1, and a second I/O controller 753 to control input/output of second and third data input through a hub 787 including the second connection unit 783 and the third connection unit 785 respectively connected with the second I/O device P2, and the third I/O device P3.

Further, as shown in FIG. 9, the display apparatus 700 further includes a first controller 740 controlling the first image processing unit 730, and a casing (not shown) accommodating the display unit 770.

The first controller 740 may control the data I/O processing unit 750 in addition to the first image processing unit 730. The data I/O processing unit 750 may be configured as a single chip, that is, an SOC.

The first controller 740 may be configured to control the display apparatus 700 overall in addition to the first image processing unit 730 and the data I/O processing unit 750.

The data I/O processing unit 750 and the first controller 740 may be connected to each other by a data bus (not shown) or may be configured as a single chip, that is, an SOC.

When there is a request for transmission of the second data from the second I/O device P2 to the third I/O device P3, the first controller 740 may control the data I/O processing unit 750 to store the second data in the exclusive memory 757 and to read and transmit the second data in the exclusive memory 757 to the third I/O device P3. In detail, the second I/O controller 753 and the exclusive memory controller 755 of the data I/O processing unit 750 may be controlled by the first controller 740.

A request for transmission of data from the second I/O device P2 to the third I/O device P3 may be made through a user input unit 720, which will be described in more detail below.

When there is a request for transmission of the first data from the first I/O device P1 to the second I/O device P2 through the user input unit 720, the first controller 740 may control the data I/O processing unit 750 to store the first data in the exclusive memory 757 and to read and transmit the first data in the exclusive memory 757 to the second I/O device P2. In detail, the first I/O controller 751, and the second I/O controller 753, and the exclusive memory controller 755 of the data I/O processing unit 750 may be controlled by the first controller 740.

The display apparatus 700 may further include a first general-purpose memory 795 to store an image signal and/or a broadcast signal input through the first image signal input unit 710 or Internet data received through a network access module (not shown). The first general-purpose memory 795 may store data processed by the first image processing unit 730 and the first controller 740.

As described above, the exclusive memory 757 may be configured as an SRAM, and the first general-purpose memory 795 may be configured as an SDRAM. Here, it should be noted that the exclusive memory 757 and the first general-purpose memory 795 may be also configured as various other types of memory, without being limited to the aforementioned examples.

The exclusive memory 757 may be configured as a memory having a faster reading or writing speed than the first general-purpose memory 795.

Since the display apparatus 700 uses the exclusive memory 757 for processing data input/output through the plurality of connection units, eg., the first connection unit 781, the second connection unit 783, and the third connection unit 785, instead of the first general-purpose memory 795, time to access the first general-purpose memory 795 is not needed, thus decreasing data transmission latency.

The first image signal input unit 710, the first image processing unit 730, the first controller 740 and the upgrade apparatus connection unit 760 may be provided on a single image processing board. Alternatively, these components may be disposed on a plurality of Printed Circuit Boards (PCBs) connected to communicate with each other, without being limited thereto. Here, the image processing board may be accommodated in the casing.

The first image signal input unit 710 transmits an image signal and/or a broadcast signal received from at least one image source to the first image processing unit 730. The first image signal input unit 710 may include a tuner to receive a broadcast signal.

The first image signal input unit 710 may receive various standards of image signals in accordance with a configuration of an image source and a display mode of the display unit 770. For example, the first image signal input unit 710 may receive signals or data in accordance with HDMI, USB, and component standards and may include a plurality of connection terminals (not shown) corresponding to the respective standards. Various external devices including the image source may be connected to the connection terminals, thus enabling a signal to be received via the first image signal input unit 710.

When the upgrade apparatus 800 is connected to the upgrade apparatus connection unit 760, the first image signal input unit 710 may be configured to transmit an input image signal to the upgrade apparatus connection unit 760, and not to the first image processing unit 730, according to control of the first controller 740. That is, the first image signal input unit 710 includes a plurality of output ports receiving and outputting the input signal, thus selectively transmitting the input signal to the upgrade apparatus 800 or the first image processing unit 730 according to the control of the first controller 740. Also, the first image signal input unit 710 may be configured to provide an input signal only to the first image processing unit 730.

The first image processing unit 730 may include a demultiplexer (not shown) which performs demultiplexing, i.e., separating a broadcast signal received from the first image signal input unit 710 into an image signal, an audio signal, and optional data, a decoder (not shown) decoding the separated image signal in a predetermined image format, and a scaler (not shown) scaling the decoded image signal to a predetermined resolution to display an image on the display unit 770.

Further, the first image processing unit 730 performs various preset image processing processes on an image signal received from the first image signal input unit 710. The first image processing unit 730 outputs a processed image signal to the display panel 770, so that an image based on the image signal is displayed on the display panel 770.

The first image processing unit 730 may perform any type of image processing, without being limited to, for example, demultiplexing to separate a signal into characteristic signals, decoding corresponding to an image format of an image signal, de-interlacing to convert an interlaced image signal into a progressive form, scaling to adjust an image signal to a preset resolution, noise reduction to improve image quality, detail enhancement, frame refresh rate conversion, or the like.

The first image processing unit 730 may be provided as an image processing board (not shown) in which a circuit system to conduct such processes, such as various chip sets (not shown), a memory (not shown), electronic components (not shown) and wiring (not shown), is mounted on a PCB (not shown).

Meanwhile, the upgrade apparatus connection unit 760 is configured to be connectable to a body connection unit 810 of the upgrade apparatus 800 so that the display apparatus 700 and the upgrade apparatus 800 communicate at least one of data, signals, information, and power with each other.

The upgrade apparatus connection unit 760 may have a predetermined number of ground terminals to stably transmit and receive the data, signals, information, or power.

The upgrade apparatus connection unit 760 may be disposed in the casing which has an opening. That is, the casing may be formed with an opening (not shown) in a corresponding position to the upgrade apparatus connection unit 760 so that the upgrade apparatus connection unit 760 is exposed. A user may insert the body connection unit 810 of the upgrade apparatus 800 into the upgrade apparatus connection unit 760 through the opening, thereby connecting the upgrade apparatus 800 to the display apparatus 700 to communicate therewith. Accordingly, the user may conveniently install the upgrade apparatus 800 without separating the casing.

Defining a side on which a screen of the display unit 770 is disposed as a front side and the opposite side as a rear side, the opening may be formed on the rear side of the casing. Accordingly, the upgrade apparatus 800 may be installed on the rear side of the casing so that the outward appearance of the display apparatus 700 is not affected.

Further, a cap (not shown) may be detachably installed in the casing to close the opening when the upgrade apparatus 800 is not inserted into the upgrade apparatus connection unit 760. Accordingly, foreign materials, such as dust, are prevented from flowing into the casing through the opening before the upgrade apparatus 800 is mounted.

The upgrade apparatus connection unit 760 may transmit at least one of the input signal input through the first image signal input unit 710 and the first output signal output by the first image processing unit 730 to the body connection unit 810.

Here, the first output signal may include at least one of a first image signal and a first audio signal.

The upgrade apparatus connection unit 760 may be configured as a connection port in accordance with general standards, such as HDMI, USB and component. As necessary, the upgrade apparatus connection unit 760 may be configured to communicate data, signals, information, or power according to a low voltage differential signaling (LVDS) standard.

The upgrade apparatus connection unit 760 may be configured in various types and forms, without being limited to the foregoing examples, as long as it enables the display apparatus 700 and the upgrade apparatus 800 to communicate at least one of data, signals, information, and power with each other.

When the upgrade apparatus 800 is not connected, the upgrade apparatus connection unit 760 transmits the first image signal output by the first image processing unit 730 to the display unit 770. When the upgrade apparatus 800 is not connected to the upgrade apparatus connection unit 760, a signal connection member (not shown) for transmitting the first image signal output by the first image processing unit 730 to the display unit 770 may be inserted into the upgrade apparatus connection unit 760. Since the signal connection member serves only a signal transmitting function, it may be removed from the upgrade apparatus connection unit 760 when the upgrade apparatus 800 is connected to the upgrade apparatus connection unit 760.

The upgrade apparatus connection unit 760 may receive the second output signal processed by the second image processing unit 820 through the body connection unit 810 of the upgrade apparatus 800 and may transmit the received second output signal to the display unit 770.

As necessary, when the upgrade apparatus 800 is configured to output the second output signal directly to the display unit 770, and not via the display apparatus 700, the upgrade apparatus connection unit 760 may not receive the second output signal from the upgrade apparatus 800.

The upgrade apparatus connection unit 760 may be configured to enable the first controller 740 and the second controller 830 of the upgrade apparatus 800 to communicate a control instruction with each other. That is, the upgrade apparatus connection unit 760 may include a connection port to transmit and receive the control instruction.

Meanwhile, although the exclusive memory controller 755 and the exclusive memory 757 have been illustrated for use in order to process data input/output through the first connection unit 781, the second connection unit 787, and the third connection unit 785, they may be also used to transmit data between the display apparatus 700 and the upgrade apparatus 800, if necessary.

When the upgrade apparatus 800 is not connected to the upgrade apparatus connection unit 760, the first controller 740 controls the first image processing unit 730 to process an image signal and/or broadcast signal input through the first image signal input unit 710.

When the upgrade apparatus 800 is connected to the upgrade apparatus connection unit 760, the first controller 740 controls the first image signal input unit 710 and the first image processing unit 730 so that at least one of the input signal and the first output signal is transmitted to the upgrade apparatus 800 through the upgrade apparatus connection unit 760 and processed by the second image processing unit 820.

The first controller 740 may detect whether the upgrade apparatus 800 is connected through the upgrade apparatus connection unit 760.

When the second output signal processed by the upgrade apparatus 800 is received by the upgrade apparatus connection unit 760 through the body connection unit 810, the first controller 740 may control the upgrade apparatus connection unit 760 to transmit the second output signal to the display apparatus 770, which will be described in detail below.

When the upgrade apparatus 800 is not connected to the upgrade apparatus connection unit 760, a first image corresponding to the first output signal output by the first image processing unit 730 is displayed on the display unit 770. On the contrary, when the upgrade apparatus 800 is connected to the upgrade apparatus connection unit 760, a second image corresponding to the second output signal output by the second image processing unit 820 is displayed on the display unit 770.

The display unit 770 may be configured in various display types using liquid crystals, plasma, light emitting diodes, organic light emitting diodes, a surface conduction electron emitter, a carbon nano-tube, nano-crystals, or the like, without being limited thereto.

The display unit 770 may further include an additional element depending on a display mode thereof. For example, in a display mode using liquid crystals, the display unit 130 may include a liquid crystal display (LCD) panel, a backlight unit (not shown) providing light to the panel, and a panel drive board (not shown) driving the panel.

Further, the display apparatus 700 may further include a conversion-amplification unit 791 converting an audio signal separated by the first image processing unit 730 into a preset format and amplifying the signal, and an audio output unit 790 outputting the amplified audio signal. Here, the audio output unit 790 may include a speaker.

Also, the display apparatus 700 may further include a user input unit 720 outputting a preset command according to manipulation by a user and a first storage unit 797 storing unlimited data or information.

The user input unit 720 transmits various preset control commands or unlimited information to the first controller 740 by a user's manipulation and input. The user input unit 720 may be provided as a menu key and an input panel installed on an outside of the display apparatus 700 or as a remote controller separate from the display apparatus 700.

The user input unit 720 may be configured to communicate with the display apparatus 700 using a short-range wireless communication method, such as Bluetooth or infrared communication. In this case, the user input unit 720 may include a wireless keyboard, a wireless mouse, or the like in addition to a remote controller.

As necessary, the user input unit 720 may be configured as a single body with the display unit 770. That is, when the display unit 770 is a touch screen, a user may transmit a preset command to the first controller 740 through an input menu (not shown) displayed on the display unit 770.

The first storage unit 797 stores unlimited data according to control of the first controller 740. The first storage unit 797 may be configured as a nonvolatile memory, such as a flash memory and a hard disk drive. The first storage unit 797 is accessed by the first controller 740, and the data stored in the first storage unit 740 may be read, recorded, revised, deleted, or updated by the first controller 740.

The first storage unit 797 may store, for example, an operating system to run the display apparatus 700 and various applications, image data and optional data which are executable in the operating system.

The first controller 740 performs control operations of various components of the display apparatus 700. For example, the first controller 740 conducts an image processing process of the first image processing unit 730, transmission and reception of signals, information, or data through the first image signal input unit 7110, and a control operation in response to a command from the user input unit 720, thereby controlling general operations of the display apparatus 700.

The upgrade apparatus 800 may be connected to the display apparatus 700 via a wire-based network or wirelessly. In the exemplary embodiment, the upgrade apparatus 800 and the display apparatus 700 may be connected to each other via a wire-based network to transmit and receive data, information, signals, or power. As described above, the upgrade apparatus 800 includes the body connection unit 810 to transmit or receive power and data to or from the display apparatus 700, and the display apparatus 700 includes the upgrade apparatus connection unit 760 to transmit, or receive power and data to or from the upgrade apparatus 800. That is, the upgrade apparatus 800 may receive power needed for driving from the display apparatus 700 through the body connection unit 810. As necessary, the upgrade apparatus 800 may further include a power conversion unit (not shown) to convert power input from the display apparatus 700 into power needed for driving. Here, when the display apparatus 700 converts and transmits all power required by the upgrade apparatus 800, the power conversion unit may be omitted.

As necessary, the upgrade apparatus 800 may be supplied with driving power needed to operate from a separate external power source (commercial power source or battery), not directly from the display apparatus 800 through the body connection unit 810.

Also, unlike in FIG. 9, the upgrade apparatus 800 may be connected to the display apparatus 700 wirelessly if necessary. In this case, the upgrade apparatus 800 may be supplied with operation power from a separate external power source or battery, and not from the display apparatus 700.

Before the upgrade apparatus 800 is connected to the display apparatus 700, the display apparatus 700 autonomously processes an image signal received from the outside according to a preset image processing process and displays an image based on the signal. However, when the upgrade apparatus 800 is connected to the display apparatus 700, hardware or software of the display system 1 performing the above image processing procedure is upgraded. Accordingly, new functions or upgraded functions may be provided to a user due to the upgrade apparatus 800. For example, as the upgrade apparatus 800 is connected, there may be provided an image with higher quality than that realized by the display apparatus 700 alone.

The upgrade apparatus 800 includes the body connection unit 810 connected to the display apparatus 700, the second image processing unit 820 receiving and processing a signal output from the display apparatus 700 through the body connection unit 810, and the second controller 830 controlling the second image processing unit 820.

Here, when the second image processing unit 820 is configured to be controlled only by the first controller 740 of the display apparatus 700, the second controller 830 may be omitted as necessary.

The second image processing unit 820 processes any one of the input signal of the first image signal input unit 710 output from the display apparatus 700 and the first output signal output from the first image processing unit 730 to output a second output signal.

The second output signal output by the second image processing unit 820 is transmitted to the display unit 770 through the body connection unit 810 and the upgrade apparatus connection unit 760. Accordingly, a second image corresponding to the second output signal may be displayed on the display unit 770. Since the second image processing unit 820 additionally performs an updated function from that of the first image processing unit 730 or a function which cannot be conducted by the first image processing unit 730, an upgraded image which is not realized by the display apparatus 700 or is hard for the display apparatus 700 to realize is displayed on the display unit 770.

For example, a full HD image is not provided by the first image processing unit 730 but may be provided by the second image processing unit 820. Further, a 3D image is not realized by the first image processing unit 130 but may be presented through the second image processing unit 820. Such added and expanded functions are only illustrative examples and various changes can be made.

Here, the second image processing unit 820 may reprocess the audio signal in addition to the image signal, and accordingly the reprocessed and upgraded audio signal may be provided to the display apparatus 700.

Meanwhile, the upgrade apparatus 800 may further include a second image signal input unit 850 which receives a broadcast signal or an image from an image source and transmits the signal to the second image processing unit 820.

As described above, the broadcast signal or image signal is received or input through the first image signal input unit 710 of the display apparatus 700. However, if needed, the upgrade apparatus 800 may include the second image signal input unit 850 to receive a broadcast signal or image signal separately from the display apparatus 700. In this case, when it is detected that the upgrade apparatus 800 is connected to the upgrade apparatus connection unit 760, the first controller 740 of the display apparatus 700 may stop operations of the first image signal input unit 710 and the first image processing unit 730. Here, an input signal (broadcast signal or image signal) input through the second image signal input unit 850 is transmitted to the second image processing unit 820 and processed, and a second output signal output by the second image processing unit 820 may be transmitted to the display unit 770 through the upgrade apparatus connection unit 760 of the display apparatus 700. Accordingly, a second image corresponding to the second output signal may be displayed on the display unit 770.

Alternatively, when the upgrade apparatus 800 independently receives a broadcast signal or image signal through the second image signal input unit 850, the first controller 740 may control the first image processing unit 730 to process a signal input through the first image signal input unit 710 and output a first output signal to the display unit 770. Here, a first image corresponding to the first output signal may be displayed as a main screen or sub-screen on the display unit 770. At the same time, when receiving the broadcast signal or image signal through the second image signal input unit 850, the upgrade apparatus 800 processes the signal in the second image processing unit 820 and transmits a second output signal to the display unit 770. Accordingly, a second image corresponding to the second output signal may be displayed on the display unit 770 as a sub-screen or main screen corresponding to the first image. That is, the first input signal (broadcast signal and/or image signal) input through the first image signal input unit 710 of the display apparatus 700 and the second input signal input through the second image signal input unit 850 of the upgrade apparatus 800 are processed into the first image and the second image, respectively, which may be displayed in picture in picture (PIP).

When it is detected that the upgrade apparatus 800 is connected, the first controller 740 of the display apparatus 700 may control the first image processing unit 730 and the first image signal input unit 710 in cooperation with the second controller 830 of the upgrade apparatus 800. For example, the first controller 740 may be responsible for controlling part of the demultiplexer (not shown), the decoder (not shown) and the scaler (not shown) of the first image processing unit 730, and the second controller 830 may be responsible for controlling the remaining parts.

When necessary, the first controller 740 may have priority to control the first image signal input unit 710 and the first image processing unit 730, and the second controller 830 may assist the first controller 740.

On the contrary, the second controller 830 may have priority to control the first image signal input unit 710 and the first image processing unit 730, and the first controller 740 may assist the second controller 830.

Meanwhile, when it is detected that the upgrade apparatus 800 is connected, the first controller 740 of the display apparatus 700 may entirely transfer the control function of the first controller 740 to the second controller 830. Here, the first controller 740 does not give a control instruction, but may just deliver a control instruction between subjects previously controlled by the first controller 740 and the second controller 830. If necessary, an exclusive control communication line may be separately provided to transmit and receive a control instruction between the second controller 830 and the subjects previously controlled by the first controller 740.

The upgrade apparatus 800 may further include a second storage unit 840.

The second storage unit 840 may store unlimited data.

The second storage unit 840 may be configured as a non-volatile memory, such as a flash memory and a hard disk drive. The second storage unit 840 is accessed by the first controller 740 or the second controller 830, and data stored in the storage unit 840 is read, recorded, revised, deleted, or updated by the first controller 740 or the second controller 830. Meanwhile, the first storage unit 797 may be accessed by not only the first controller 740, but also by the second controller 830 depending on a configuration thereof.

Further, the second storage unit 840 may store an operating system which is more recently upgraded than the operating system stored in the first storage unit 797. The first controller 740 or the second controller 830 may update the operating system stored in the first storage unit 797 to the upgraded operating system and drive the updated operating system. As necessary, the operating system of the second storage unit 840 may be driven instead of the operating system stored in the first storage unit 797.

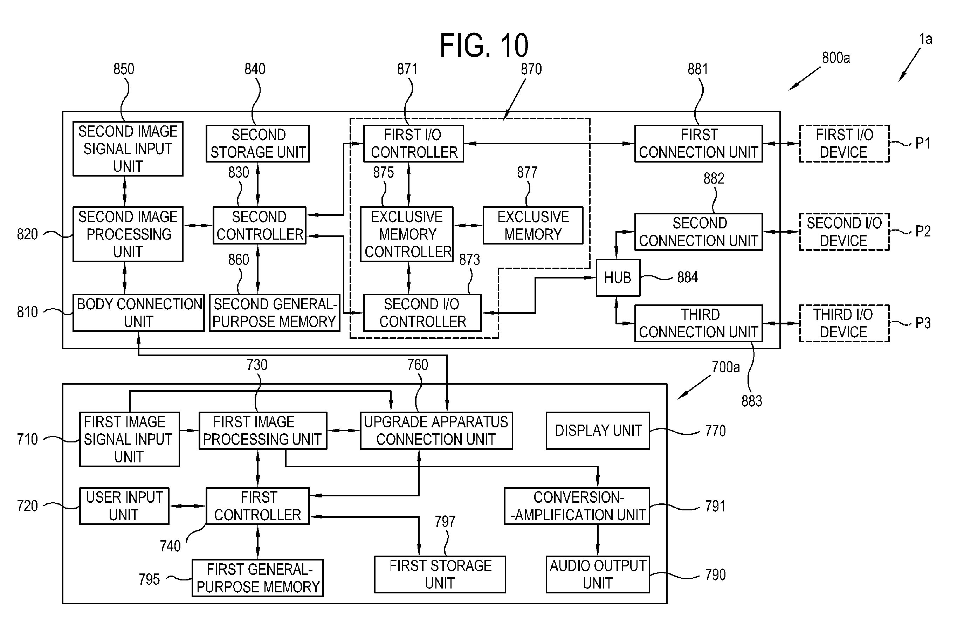

FIG. 10 illustrates a display system according to a modification of the second exemplary embodiment.

As shown in FIG. 10, the display system 1a includes a display apparatus 700a and an upgrade apparatus 800a connectable to the display apparatus 700a to upgrade a function of the display apparatus 700a.

Unlike in FIG. 9, in the display system 1a of FIG. 10, a data I/O processing unit 870 is provided in the upgrade apparatus 800a.

The display apparatus 700a has the same configuration as that illustrated above in FIG. 9, and thus descriptions thereof will be omitted herein.

The upgrade apparatus 800a includes a body connection unit 810 which can be connected to the display apparatus 700a including a first image processing unit 730 and a first controller 740, a second image processing unit 820 processing an input image signal to output a second output signal, a second controller 830 controlling the second image processing unit 820; and the data I/O processing unit 870 including first I/O controller 871 and second I/O controller 873 to control input/output of data through at least one connection unit, such as first connection unit 881, second connection unit 882, and third connection unit 883, connectable with at least one I/O device, such as the first I/O device P1, the second I/O device P2, and the third I/O device P3, an exclusive memory 877 to store data input or output through the first connection unit 881, second connection unit 882, and third connection unit 883 only, and an exclusive memory controller 875 to store the data input through the first connection unit 881, the second connection unit 882, and the third connection unit 883, in the exclusive memory 877 or to read the data stored in the exclusive memory 877 according to a control instruction of the first I/O controller 871 and the second I/O controller 873.

The first connection unit 881, the second connection unit 882, and the third connection unit 883, may be configured as connection ports in accordance with widely used general standards, such as HDMI, USB, component, DVI and IEEE 1394 ports. Further, the first connection unit 881, the second connection unit 882, and the third connection unit 883, may be configured to connect to the external first I/O device P1, the second I/O device P2, and the third I/O device P3 through at least one wireless network among a WLAN, WiFi, WiBro and LTE.

The first connection unit 881, the second connection unit 882, and the third connection unit 883 include the first connection unit 881, the second connection unit 882, and the third connection unit 883 to which the first I/O device P1, the second I/O device P2, and the third I/O device P3 are connected, respectively.

Here, the first I/O controller 871 and the second I/O controller 873 may include a first I/O controller 871 to control input/output of first data through the first connection unit 881 connected with the first I/O device P1, and a second I/O controller 873 to control input/output of second and third data input through a hub 884 including the second connector unit 882 and third connection unit 883 respectively connected with the second I/O devices P2 and the third I/O device P3.

The second controller 830 may control the data I/O processing unit 870 in addition to the second image processing unit 820. The data I/O processing unit 870 may be configured as a single chip, that is, an SOC.

As necessary, the second controller 830 may be configured to control part or all of the components of the display apparatus 700a in addition to the second image processing unit 820 and the data I/O processing unit 870.

The data I/O processing unit 870 and the second controller 830 may be connected to each other by a data bus (not shown) and may be configured as a single chip, that is, an SOC.

When there is a request for transmission of the second data from the second I/O device P2 to the third I/O device P3, the second controller 830 may control the data I/O processing unit 870 to store the second data in the exclusive memory 877 and to read and transmit the second data in the exclusive memory 877 to the third I/O device P3. In detail, the second I/O controller 873 and the exclusive memory controller 875 of the data I/O processing unit 870 may be controlled by the second controller 830.

A request for transmission of data from the second I/O device P2 to the third I/O device P3 may be made through a user input unit 720 of the display apparatus 700a.

When there is a request for transmission of the first data from the first I/O device P1 to the second I/O device P2 through the user input unit 720, the second controller 830 may control the data I/O processing unit 870 to store the first data in the exclusive memory 877 and to read and transmit the first data in the exclusive memory 877 to the second I/O device P2. In detail, the first I/O controller 871 and the second I/O controller 873 and the exclusive memory controller 875 of the data I/O processing unit 870 may be controlled by the second controller 830.

The upgrade apparatus 800a may further include a second general-purpose memory 860 to store an image signal and/or a broadcast signal input through the second image signal input unit 850 or data processed by the second image processing unit 820 and the second controller 830.

As described above, the exclusive memory 877 may be configured as an SRAM, and the general-purpose memory 860 may be configured as an SDRAM. Here, it should be noted that the exclusive memory 877 and the general-purpose memory 860 may be also configured as various types of memory, without being limited to the aforementioned examples.

Here, the exclusive memory 877 may be configured as a memory having a faster reading or writing speed than the second general-purpose memory 860.

The upgrade apparatus 800a uses the exclusive memory 877 for processing data input/output through the first connection unit 881, the second connection unit 882, and third connection unit 883, thereby decreasing data transmission latency taken to transmit data.

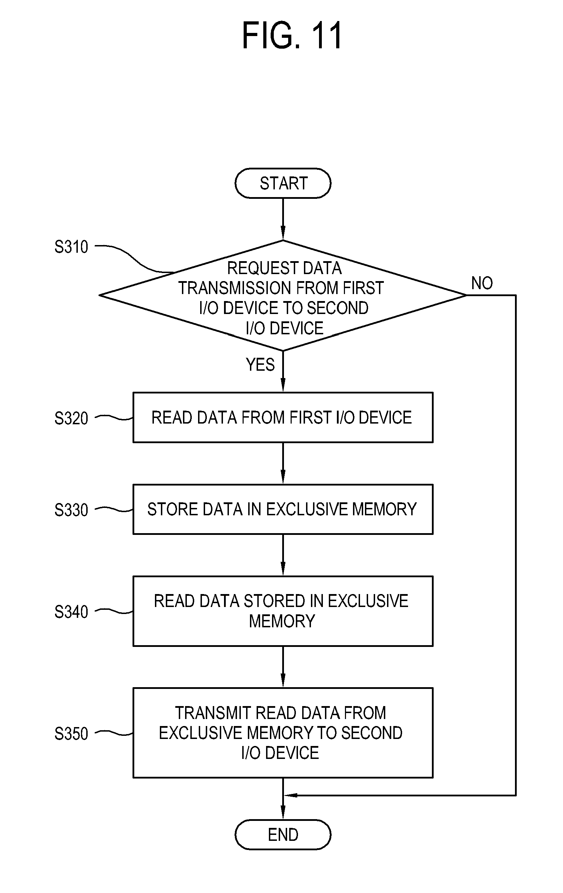

FIG. 11 is a flowchart illustrating a data input/output processing method of the electronic system according to the second exemplary embodiment.

The electronic system includes a plurality of connection units to which a first I/O device and a second I/O device are connected, respectively. Here, as illustrated in FIGS. 8 and 9, the electronic system may include the display apparatus 700 or 700a, such as a TV, or the upgrade apparatus 800 or 800a connected to the display apparatus 700 or 700a to functionally upgrade the display apparatus 700 or 700a.

At least one of the first I/O device and the second I/O device may include at least one of a storage device, such as a USB storage medium, a hard disk, a flash memory and a solid state drive, and a mobile device, such as a PDA, a smartphone, a smart pad and a notebook.

In the data input/output processing method of the electronic system, when there is a request for transmission of data from the first I/O device to the second I/O device (S310), the first I/O device reads data (S320).

Then, the data is stored in an exclusive memory to store data input or output through the connection units only (S330).

The data stored in the exclusive memory is read (S340) and transmitted to the second I/O device (S350).

Here, the data transmitted to the second I/O device may be processed by the second I/O device or stored in the second I/O device.

Although a few exemplary embodiments have been shown and described, it will be appreciated by those skilled in the art that changes may be made in these exemplary embodiments without departing from the principles and spirit of the exemplary embodiments, the scope of which is defined in the appended claims and their equivalents.

## Claims

1. An electronic system comprising:
a first system on chip (SOC) comprising a first functional block which performs a first function, a second functional block which performs a second function, and a first bus network which performs communication between the first functional block and the second functional block;
a connection unit which connects a second SOC to the first SOC, wherein the second SOC comprises a third functional block configured to upgrade the first function and a second bus network; and
a power supply unit which supplies power to the first SOC and the second SOC,
wherein the power supply unit blocks power from being supplied to the first functional block if the second SOC is connected to the connection unit.

2. The electronic system of claim 1, wherein the connection unit comprises an interface which performs communication between the first bus network and the second bus network.

3. The electronic system of claim 2, wherein the second functional block accesses the third functional block through the interface, and the third functional block accesses the second functional block through the interface.

4. The electronic system of claim 2, wherein the interface comprises a packing unit which packs data transmitted from the second functional block to the third functional block; and a de-packing unit which unpacks packed data transmitted from the third functional block to the second functional block.

5. A control method of an electronic system comprising a first system on chip (SOC), which comprises a first functional block which performs a first function, a second functional block which performs a second function, and a first bus network which performs communication between the first functional block and the second functional block, the control method comprising:
connecting a second SOC to the first SOC, the second SOC comprising a third functional block configured to upgrade the first function and a second bus network; and
blocking power from being supplied to the first functional block of the first SOC.

6. An electronic system comprising:
a connection unit to which at least one input/output (I/O) device is connected;
an I/O controller which controls input/output of data through the connection unit;
an exclusive memory which stores only the data input or output through the connection unit; and
an exclusive memory controller which stores the data input through the connection unit in the exclusive memory, or reads the data stored in the exclusive memory according to a control instruction of the I/O controller.

7. The electronic system of claim 10, wherein the I/O controller comprises a first I/O controller which controls input/output of first data through a first connection unit connectable with a first I/O device; and a second I/O controller which controls input/output of second data and third data input through a hub comprising a second connection unit and a third connection unit connectable with a second I/O device and a third I/O device, respectively.

8. The electronic system of claim 7, further comprising a central processing unit (CPU) which is connected to the first I/O controller and the second I/O controller to communicate with the first I/O controller and the second I/O controller through a data bus, wherein the CPU, the data bus, the first I/O controller, the second I/O controller, the exclusive memory controller, and the exclusive memory are configured on a single chip.

9. The electronic system of claim 8, wherein the CPU controls the exclusive memory controller and the second I/O controller to store the second data in the exclusive memory, and to read and transmit the second data stored in the exclusive memory to the third I/O device if there is a request for transmission of the second data from the second I/O device to the third I/O device.

10. The electronic system of claim 8, wherein the CPU controls the exclusive memory controller and the first I/O controller and the second I/O controller to store the first data in the exclusive memory, and to read and transmit the first data stored in the exclusive memory to the second I/O device if there is a request for transmission of the first data from the first I/O device to the second I/O device.

11. A display apparatus comprising:
the electronic system according to any one of claims 6 to 10; and
an image signal input unit;
a image processing unit which processes an image signal input by the image signal input unit to output a first output signal;
a display unit which displays at least one of a first screen corresponding to the first output signal and a second screen corresponding to a second output signal received from I/O device connected with the connection unit.

12. A data input/output processing method of an electronic system comprising a plurality of connection units respectively connected with a first input/output (I/O) device and a second I/O device, the method comprising:
reading data from the first I/O device in response to a request for transmission of data from the first I/O device to the second I/O device;
storing the read data in an exclusive memory which stores only data input or output through the plurality of connection units;
reading the data stored in the exclusive memory; and
transmitting the read data to the second I/O device.

13. The data input/output processing method of claim 12, wherein at least one of the first I/O device and the second I/O device comprises at least one of a Universal Serial Bus (USB) storage medium, a hard disk, a flash memory, a solid state drive, and a mobile device.

14. The data input/output processing method of claim 13, wherein the electronic system comprises at least one of a display apparatus and an upgrade apparatus connected to the display apparatus to upgrade a performance of the display apparatus.
